# EUROPEAN PATENT APPLICATION

(11) **EP 4 071 583 A1**
(43) Date of publication of application: **12.10.2022**
(21) Application number: 22160906.8
(22) Date of filing: 08.03.2022
(51) Int. Cl.: G06F 1/3234, G06F 12/1009, G06F 12/0891, G06F 12/02

(54) **AVOIDING PROCESSOR STALL WHEN ACCESSING COHERENT MEMORY DEVICE IN LOW POWER**

(30) Priority: 09.04.2021 US 202117227220
(71) Applicant: INTEL Corporation, Santa Clara, CA 95054 (US)
(72) Inventor: BOYD, James A., Hillsboro, 97124 (US); COX, Christopher E., Placerville, 95667 (US); TALPALLIKAR, Nikhil, Portland, 97229 (US)
(74) Representative: Rummler, Felix

(57) **Abstract**

A memory subsystem with memory managed with coherent access can manage page table entries to enable putting the memory in a low power state. The memory control can change a page table entry for the memory prior to triggering the memory to enter the low power state. The change to the page table entry will cause a page fault for a subsequent access to the memory. The page fault will trigger handling the access to the memory with a fault routine, avoiding synchronous delay to the memory that would occur with normal access.

## Description

### FIELD

Descriptions are generally related to computer systems, and more particular descriptions are related to avoidance of stalling the processor when accessing coherent memory devices.

### BACKGROUND

Devices connected over PCIe (peripheral component interconnect express) or NVMe (nonvolatile memory express) have low power link states and can enter the low power state while the system is active. PCIe is traditionally non-coherent and managed by host drivers, where the device drivers can handle I/O (input/output) actions sent to them when they are powered down. Alternatively, the I/O actions can be handled by the bus transitioning back automatically in hardware. Exiting the low power state, whether link or device state, typically causes latency, but the latency traditionally does not impact the host processor from processing other activities or handling interrupts when the memory is non-coherent. The non-coherent nature of the links enables the actions to be handled asynchronously or in a non-blocking manner.

A coherent memory waking from a low power state to handle an I/O action would cause a stall at the host processor. CXL (compute express link) is a protocol based on PCIe, and defines a CXL.mem interface for coherent memory connections. With CXL.mem or another coherent memory interconnection, the memory interface is coherent. The host processor waits for the completion of I/O actions to coherent memory.

If coherent memory was permitted to enter low power states, it could stall the host processor, which would deteriorate system performance. One mechanism to reduce the latency is to not permit the memory to enter low power states that could cause the host processor to stall. However, preventing coherent memory from entering low power states can reduce the latency impact at the cost of increased energy usage. The "always-on" nature of coherent memory wastes significant energy, resulting in lower system battery life. The wasted energy could also result in failure to meet energy compliance regulations.

### BRIEF DESCRIPTION OF THE DRAWINGS

The following description includes discussion of figures having illustrations given by way of example of an implementation. The drawings should be understood by way of example, and not by way of limitation. As used herein, references to one or more examples are to be understood as describing a particular feature, structure, or characteristic included in at least one implementation of the invention. Phrases such as "in one example" or "in an alternative example" appearing herein provide examples of implementations of the invention, and do not necessarily all refer to the same implementation. However, they are also not necessarily mutually exclusive.
**Figure 1** is a block diagram of an example of a multilevel memory system with coherent memory that can be put into a low power state without stalling the host processor.
**Figure 2** is a block diagram of an example of a system that can change a page table entry prior placing a coherent memory in a low power state.
**Figure 3** is a flow diagram of an example of a process for putting a coherent memory into low power.
**Figure 4** is a flow diagram of an example of a process for waking a coherent memory from low power.
**Figure 5** is a block diagram of an example of a memory subsystem in which coherent low power state management can be implemented.
**Figure 6** is a block diagram of an example of a computing system in which coherent low power state management can be implemented.
**Figure 7** is a block diagram of an example of a mobile device in which coherent low power state management can be implemented.

Descriptions of certain details and implementations follow, including non-limiting descriptions of the figures, which may depict some or all examples, and well as other potential implementations.

### DETAILED DESCRIPTION

As described herein, a memory subsystem with memory managed with coherent access can manage page table entries to enable putting the memory in a low power state. The memory control can change a page table entry for the memory prior to triggering the memory to enter the low power state. The memory control can include a memory manager of the host operating system (OS) and a memory driver. The change to the page table entry will cause a page fault for a subsequent access to the memory. The page fault will trigger handling the access to the memory with a fault routine, avoiding synchronous delay to the memory that would occur with normal access.

A system that includes coherent memory is often a secondary memory or supplemental memory rather than being the main system memory. Thus, if the coherent memory is a second tier of memory in a multilevel memory (MLM) system or a remote memory for a NUMA (non-uniform memory access) architecture node, there are likely to be times when the system is accessing the main memory and the coherent memory device is not utilized. As such, there can be periods where it will make sense to trigger the device to enter a low power state. An MLM system refers to a system that has a primary memory as near memory and a secondary memory as far memory, where near memory access is faster (lower latency) than far memory access. A NUMA architecture refers to a system that has more than one memory bus, and a hop to a remote memory involves crossing memory bus boundaries. Thus, a remote memory has a higher latency (slower access) than the local memory.

In either case, the coherent memory may not always be utilized, given workload demands, allowing it an opportunity to enter low power modes. The management of the page table entry for the coherent memory can allow the coherent memory to enter the low power state without impacting the system performance. As described herein, the system can reduce device power while the system is active when the host is not using the coherent memory address range. In one example, the OS, such as through a memory manager or the drivers of the operating system can cause the coherent memory to enter low power states after invalidation of page table entries. With an invalid page table entry, the system will trigger a page fault routine instead of stalling the processor to wait for the device to wake from the low power state. The stalling of the processor could otherwise result in a CPU (central processing unit) timeout, hardware error, OS crash, or other system error condition.

Instead of waiting on the device to wake, the host processor can continue to process other threads, or other processes, or interrupts, which it would not be able to do if waiting for a coherent memory access to complete. During the time that the host processor is performing other tasks, the coherent memory can wake from the low power state and process the memory I/O action from the host processor.

Thus, the coherent memory can utilize low power states without direct impact on the host processor. The ability to allow the low power state can provide a significant reduction in energy consumption, which can extend the battery life of a device. The ability to use low power states can enable support for CXL (compute express link, trademarked by the CXL Consortium) on platforms with stringent regulation requirements that might otherwise by unable to support CXL. CXL can refer to the CXL 2.0 Specification, originally released by the CXL Consortium in November 2020, or the CXL 3.0 Specification, currently in discussion.

With the ability to change the page table prior to putting the memory device in a low power state, a system, for example, through the OS, has the ability to power manage a coherent device such as a memory with a CXL.mem interface. In one example, the change to the page table is an invalidation of a reference within the page table without removing the reference from the page table. A request to the coherent device that is asleep will result in a fault, which will trigger a fault routine to obtain the invalid reference.

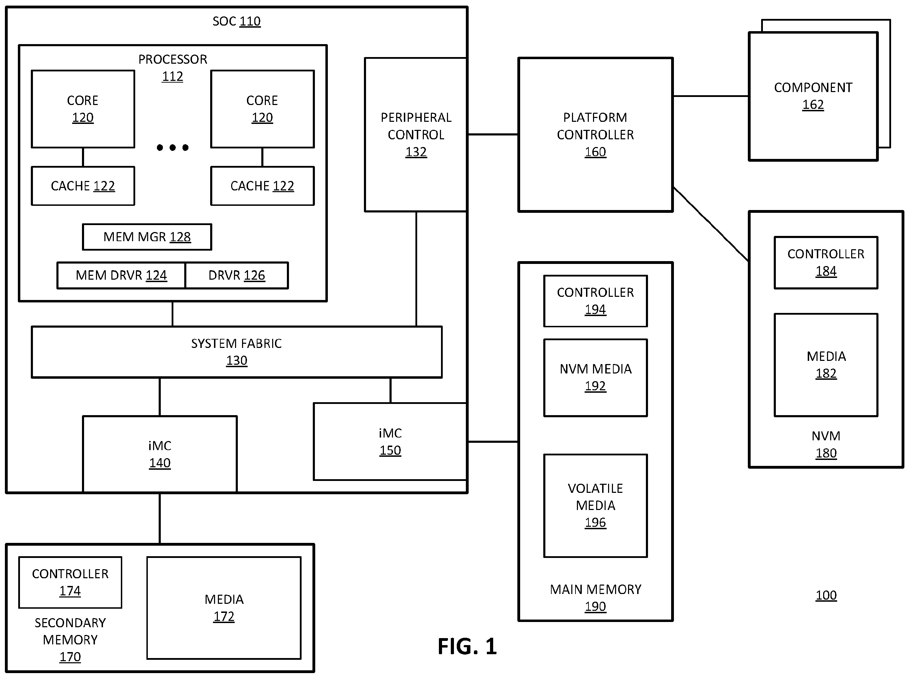

**Figure 1** is a block diagram of an example of a multilevel memory system with coherent memory that can be put into a low power state without stalling the host processor. System 100 specifically illustrates a multilevel memory system that can perform power management of a coherent device.

SOC 110 represents an example of a processor die or a processor SOC package. SOC 110 includes processor 112, which can include one or more cores 120 (i.e., a single core processor or a multicore processor) to perform the execution of instructions. In one example, cores 120 include processor side cache 122, which includes cache control circuits and cache data storage. Cache 122 can represent any type of cache on the processor side. In one example, individual cores 120 include local cache resources 122 that are not shared with other cores. In one example, multiple cores 120 share cache resources 122.

In one example, SOC 110 includes system fabric 130 to interconnect components of the processor system. System fabric 130 can be or include interconnections between processor 112, peripheral control 132, one or more memory controllers such as integrated memory controller (iMC) 150 to manage access to main memory 190 and iMC 140 to manage access to secondary memory 170, I/O controls (not specifically shown), graphics subsystem (not specifically shown), or other components. System fabric 130 enables the exchange of data signals among the components. While system fabric 130 is generically shown connecting the components, it will be understood that system 100 does not necessarily illustrate all component interconnections. System fabric 130 can represent one or more mesh connections, a central switching mechanism, a ring connection, a hierarchy of fabrics, or other interconnection topology.

In one example, SOC 110 includes one or more peripheral controllers 132 to connect to peripheral components or devices that are external to SOC 110. In one example, peripheral control 132 represents hardware interfaces to platform controller 160, which includes one or more components or circuits to control interconnection in a hardware platform or system board or motherboard of system 100 to interconnect peripherals to processor 112. The peripherals are represented by components 162. Components 162 represent any type of chip or interface or hardware element that couples to processor 112 via platform controller 160.

In one example, SOC 110 has a common substrate or board on which the components of the SOC are disposed. For example, the components of SOC 110 can be or include discrete components mounted on a common board or substrate. In one example, the components of SOC 110 can be or include circuits built on the same semiconductor substrate. In one example, the components of SOC 110 can include multiple components on a common semiconductor substrate, and one or more additional components mounted to the semiconductor substrate or with the common semiconductor substrate on a common board.

In one example, SOC 110 includes iMC 150, which represents control logic to connect to main memory 190 and manage access to main memory 190. iMC 150 can include hardware circuits and software or firmware control logic. In one example, SOC 110 includes iMC 140, which represents control logic to connect and control access to secondary memory 170. Secondary memory 170 represents one or more memory devices that have a longer latency for access as compared to main memory 190. Secondary memory 170 can alternatively be referred to as an auxiliary memory. iMC 140 can include hardware circuits and software or firmware control logic. In one example, iMC 140 can be integrated into processor 112. In one example, iMC 150 can be integrated into processor 112. In one example, iMC 140 is a part of or a subset of control logic of a memory controller represented by iMC 150.

In one example, system 100 includes NVM (nonvolatile media) 180 coupled to SOC 110 via platform controller 160. NVM 180 represents a nonvolatile memory, including media 182, which is an NVM media, and controller 184 to control access to media 182. In one example, NVM 180 is a memory device coupled to SOC 110 over a peripheral connection, such as PCIe (peripheral component interconnect express) or NVMe (nonvolatile memory express). PCIe can be in accordance with PCI Express Base Specification Revision 4.0, originally released in October 2017 by PCI-SIG, PCI Express Base Specification Revision 5.0, originally released in May 2019 by PCI-SIG, or variations. NVMe can be in accordance with NVMe Express Base Specification, originally released in June 2019 by NVM Express Inc., or a variation.

In one example, system 100 includes main memory 190, which provides primary system memory. Main memory 190 typically includes volatile media 196 to store data in a nonvolatile manner. In one example, main memory 190 includes NVM media 192 and controller 194 to control access to NVM media 192 or volatile media 196, or both NVM media 192 and volatile media 196. Controller 194 represents a controller on the memory side to manage operations on the memory in response to receipt of commands or I/O (input/output) operations.

In one example, secondary memory 170 includes a byte addressable nonvolatile memory managed by a coherent interface. In one example, iMC 140 connects to secondary memory 170 via a CXL.mem interface, such as a CXL cache/memory protocol interface (CPI) standard, such as CXL 2.0 or CXL 3.0. Media 172 represents the storage media of secondary memory 170. Controller 174 represents a controller on the memory side to manage operations on the memory in response to receipt of commands or I/O operations.

The multilevel memory system of system 100 can be configured in any of a number of ways, depending on which memory resources are included and how they are used. Not every implementation of system 100 will include all memory types illustrates. System 100 illustrates different possible variations of memory that can be used in a multilevel system.

In one example, reference to NVM media can refer to a block addressable memory device or byte addressable memory device, such as a three dimensional crosspoint memory device, other nonvolatile memory devices. In one example, the NVM media can include a nonvolatile, block addressable or byte addressable media that stores data based on a resistive state of the memory cell, or a phase of the memory cell. In one example, the memory device can use chalcogenide phase change material (e.g., chalcogenide glass). In one example, the memory device can be or include single or multi-level phase change memory (PCM) or phase change memory with a switch (PCMS), a resistive memory, nanowire memory, ferroelectric transistor random-access memory (FeTRAM), magnetoresistive random-access memory (MRAM) memory that incorporates memristor technology, or spin transfer torque (STT)-MRAM, or a combination of any of the above, or other memory.

In general, when secondary memory 170 in system 100 is used as an upper level memory or second level memory (e.g., 2LM implementation), system 100 will primarily store data in main memory 190 and secondary memory 170 can serve to extend the storage capacity of the system memory, potentially with a slower access time or longer latency as compared to main memory 190.

In one example, secondary memory 170 represents an NVDIMM (nonvolatile dual inline memory module) that includes a nonvolatile media that interfaces with the system memory bus. The NVDIMM can include any type of byte addressable or block addressable media. In one example, secondary memory 170 represents a three-dimensional crosspoint (3DXP) memory device. In one example, secondary memory 170 represents an OPTANE DIMM. Optane is a registered trademark of Intel Corporation. Optane includes memory that can be accessed as a byte addressable memory on the system bus.

As stated above, in one example, secondary memory 170 can interface with SOC 110 over a coherent CXL.mem interface or other coherent interface. Processor 112 can represent a CPU (central processing unit) for a computing device. A CPU MOV instruction or SFENCE will result in the processor waiting for data or data commitment from a coherent CXL.mem device. While waiting on the completion of these instructions, CPU cores 120 cannot process interrupts. Thus, if processor 112 issues a load or SFENCE to secondary memory 170 as a coherent device in a low link state (e.g., a link state that has a high exit latency), a low device power state (including a D3 state or other low power state), processor 112 would traditionally stall or experience a runtime error. Shallower device states (e.g., states that have a low latency exit) do not cause a stall for synchronous access by processor 112, and will retrain or wake to process the request from processor 112.

In one example, processor 112 executes memory manager (MEM MGR) 128 as part of the host OS. In one example, processor 112 executes memory driver (MEM DRVR) 124. Collectively, memory manager 128 and memory driver 124 provide memory control for a coherent memory device. Memory driver 1254 represents driver or software executed by processor 112 to manage the hardware interface of memory. In one example, memory driver 124 includes control logic to interface with secondary memory 170 as a coherent memory device. Processor 112 includes driver (DRVR) 126, which represents one or more other device drivers executed by processor 112. Driver 126 can represent a driver to another coherent device in system 100.

In one example, memory manager 128 and memory driver 124 manage the low power state of the coherent device or coherent device link. More specifically, the memory control can change a page table entry for the address space of secondary memory 170 (or other coherent memory of system 100). Changing the page table entry can trigger a page fault with fault handling for a subsequent request to secondary memory 170 by processor 112. Instead of synchronously waiting for secondary memory 170 to wake and handle the request, processor 112 can asynchronously wait for secondary memory 170 to wake based on the fault handling. Such operation can free processor 112 to perform other operations while secondary memory 170 wakes, which would avoid stalling the processor.

In one example, memory manager 128 can determine a latency anticipated for a low power state for the coherent secondary memory 170. In one example, memory manager 128 determines if the wake latency exceeds a configurable threshold. In one example, for a state that has a wake latency less than the threshold, memory manager 128 can allow secondary memory 170 to enter and exit the low power state normally. If the threshold is exceeded by the wake latency, memory manager 128 can power manage the low power state by triggering a page fault for the waking of the device.

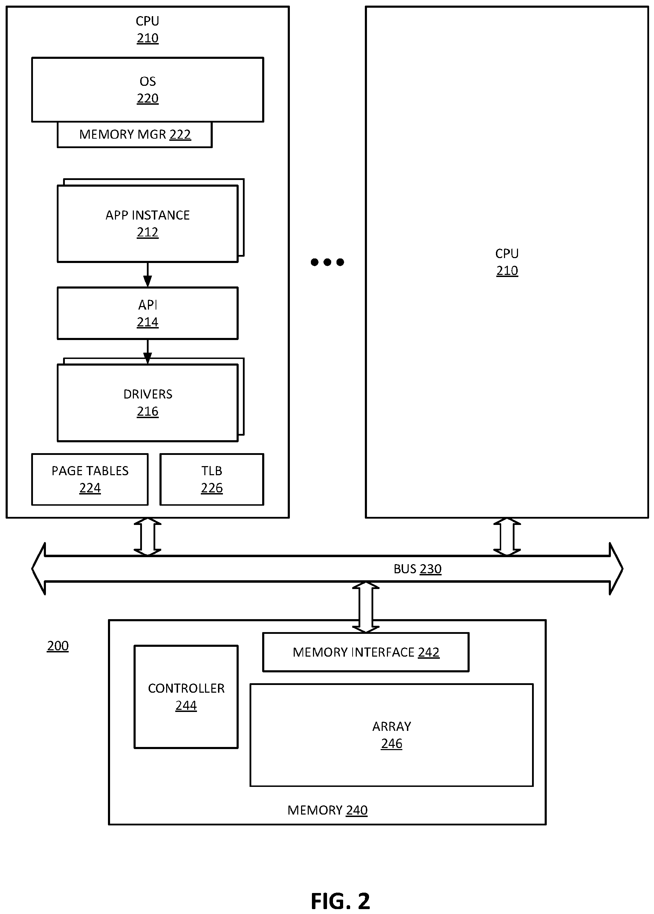

**Figure 2** is a block diagram of an example of a system that can change a page table entry prior placing a coherent memory in a low power state. System 200 represents a system in accordance with an example of system 100. System 200 illustrates multiple CPU cores, labeled as CPUs 210. The CPUs or CPU cores access memory 240, which represents a memory with a coherent interface for access.

The details of only one CPU 210 are illustrated. Other CPUs can have the same or similar components as illustrated in the detailed view of the one CPU. In one example, CPU 210 executes one or more application (APP) instances 212. Application instances 212 can include any application that generates a request for data stored on memory 240. Application instances 212 can make resource requests, such as requests for access to memory 240, through API (application programming interface) 214.

In one example, the requests by application instances 212 with API 214 result in one or more instances of drivers 216. Drivers 216 can include user mode drivers for user data and kernel mode drivers for system information. Drivers 216 can manage access to memory 240, including access from low power device states or low power link states. CPUs 210 can be coupled communicatively over bus 230 to memory 240. Bus 230 represents a high-speed communication connection between CPUs 210 and memory 240.

Memory 240 can store data for application instance 212 or for operating system (OS) 220, or components or agents of the OS. Memory 240 can store operational code and data resources for the execution of operations within CPUs 210. Operational code and data resources refers to data and code that CPUs 210 need to access to execute an application or OS 220. OS 220 provides a software platform including system hardware interface management and drivers to allow applications running under the OS access to the hardware resources of the computing environment. Drivers 216 represent drivers executed under the OS. In one example, OS 220 includes memory manager (MGR) 222 to manage the state of memory 240. Memory manager 222 can determine when access to memory 240 can enter a low power state through handling of the interface to prevent stalling of CPU 210.

In one example, memory 240 includes memory interface 242. In one example, memory interface 242 is a CXL.mem interface. As a coherent memory device, CPU 210 will wait for an I/O operation to be completed by the memory before performing other operations. Controller 244 of memory 240 represents a controller of the memory device to manage operations local to the memory device. Array 246 represents the storage array of memory 240. In one example, array 246 provides byte addressable memory. In one example, array 246 represents a volatile memory. In one example, array 246 represents a nonvolatile memory.

Page tables 224 of CPU 210 represents information managed by OS 220, such as by a filesystem or memory manager 222, to indicate a location of data and code stored in memory. More specifically, page table 224 indicate a state of data in a memory. The page tables can indicate whether references are available for the data and whether the data is available or whether access descriptors need to be refreshed for the data.

TLB (translation lookaside buffer) 226 represents logic to provide address translation for the OS and applications of CPU 210. The translation can indicate how handles for data in the OS map to address space for memory 240. In one example, the translation can include a mapping to physical addresses for the data requested. TLB 226 can perform translation for virtual memory references.

In one example, driver 216 include a memory driver to manage access to coherent memory 240. In one example, prior to triggering memory 240 to enter a low power state, memory manager 222 can change page tables 224. In one example, driver 216 does not put memory 240 into a low power state without memory manager 222 first determining whether the page tables need to be modified.

For the following examples, CXL.mem will be used as an example of a coherent memory interface. It will be understood that the examples are only for purpose of illustration, and the coherent interface is not limited to CXL.mem. In one example, OS 220 through memory manager 222 and driver 216 can determine if management of CXl.mem low power states is required.

In one example, memory manager 222 determines if the low power state meets a given exit latency criteria. If the low power state meets the latency criteria, memory manager 222 can allow memory 240 to enter and exit the state normally. Thus, memory 240 would wake up via PCIe/CXL access without any change to page table 224.

In one example, memory manager 222 determines if the low power state has an exit latency that is not acceptable for system 200, as it may result in a stall of CPU 210. In one example, for a D3 state or other "off" state, memory manager 222 always determines that the exit latency is unacceptable. For such device states that cause an undesirable CPU delay, memory manager 222 can change an entry is page table 224 prior to putting memory 240 into the low power state.

In general, the change to page table 224 can be considered to make a change that will trigger or generate a fault in response to a subsequent access to memory 240. In one example, memory manager 222 invalidates an entry in page table 224, then puts memory 240 into the low power state. With the entry invalidated, there will be no translation for the address range of memory 240, triggering a page fault. Memory manager 222 can then invoke a page fault handler, allowing asynchronous operation of an otherwise synchronous interface. Invalidating the entry in page table 224 can be performed without removing the entry from page table 224.

In one example, memory manager 222 determines that memory 240 has been idle for at least a threshold period, and determines to cause memory 240 to enter the low power state. The threshold period can be a time period set by OS policy. In one example, the time period is configurable. The time period can be different for different devices and system configurations. Typically, the memory traffic is not seen by the software or drivers. In one example, driver 216 periodically polls or queries memory 240 via a management interface (e.g., device reports time since last memory access) to determine how long the memory has been idle.

In one example, memory manager 222 checks to see if any pages in the CXL.mem HPA (host physical address) range are locked. The pages can be locked, for example, for DMA (direct memory access) or other purposes. In one example, if any pages are locked, memory manager 222 will abort the low power entry and leave the device in a higher power state. In such a case, shallower low power states may be allowed, while deeper low power states are not permitted.

In one example, memory manager 222 invalidates CXL.mem HPA page tables in page tables 224. In one example, memory manager 222 merely invalidates the entry without destroying them. In one example, memory manager 222 performs a TLB shoot down of the addresses corresponding to the invalidated addresses in TLB 226. In one example, system 200 maintains first tier or first level page table entries in system memory. In one example, the OS through memory manager 222 clears a present bit in the tables. By clearing a "present" bit, the system forces a fault if the memory address space is referenced. The reference occurs with a subsequent access request by CPU 210 to address space of memory 240.

In one example, memory manager 222 edits one or more page table entries (PTEs). In one example, page tables 224 represent a last stage of page table hierarchy which gives the final physical address and flags for addresses for memory access. The flags can include, for example, a flag for a valid bit. Invalidating the PTE can allow the addresses to remain in page tables 224, thus maintaining the physical address mapping of the pages. Invalidating the pages does not remove the mapping and require generating the mapping, but merely invalidates the mapping, which can be made valid again to allow access after the device awakes from low power.

The OS memory manager can have an explicit policy (e.g., from system start) to manage the first level of all page tables for CXL.mem in first tier memory of a multilevel memory. Thus, for example, the system may maintain page tables 224 in system memory, such as system memory 190 of system 100. The first level in host memory can ensure no access to memory 240 to check tables results in accessing CXL.mem HPAs. After changing page tables 224, memory manager 222 can instruct memory 240 to enter the low power (e.g., link state, device state, D3). In one example, OS 220 saves the state of a CXL.mem object as being in low power for future reference.

In one example, to wake memory 240 from the low power state on a subsequent access or the next access to the memory address range, driver 216 can reference a CXL.mem virtual address that maps to an HPA of memory 240 in a low power state. Without a valid translation for the HPAs, the reference will result in a fault. In one example, clearing the present bit for the first level page table entries will cause the reference to the address range to result in a fault. In one example, the combination of no translation and the cleared or reset present bit will trigger the fault. The fault will occur prior to the instruction being executed on CPU 210, which will prevent CPU 210 from stalling. The address causing the fault will not be executed until the fault is handled. As such, CPU 210 can continue other work or process interrupts. In one example, CPU 210 time slices other operations with fault processing.

In one example, a fault handler checks a low power state flag. The state flag can be saved by the OS memory manager, saving the flag, and managing the data in the first tier of system memory. In one example, if the device is not in low power, the memory manager can service page table updates for page tables 224. Such a process can be executed in accordance with normal page table servicing operations.

In one example, if the device is in a low power state, a fault handler of memory manager 222 requests driver 216 to wake memory 240. In one example, if memory 240 is in a D3 state or other powered down state, driver 216, either a CXL.mem driver or a bus driver (driver for bus 230) calls an ACPI (advanced configuration and power interface) method to have the platform restore power to memory 240. After restoring power to memory 240, memory manager 222 sets a PMCSR (power management control and status register) an active state. In one example, in combination with setting memory 240 to an active state, memory manager 222 can re-enumerate the device for a powered down state to an active state (e.g., D3 to D0 transition). Once fully powered up, with decoders and interface hardware re-initialized, the system can notify CPU 210 of the fault to allow it to perform fault exception handling.

If memory 240 is in a very low power link state or very low power device state, but not powered down, in one example, driver 216 can issue an explicit management wake command. For example, driver 216 can issue a no-op or any management command that results in interrupt completion. The fault handling or other management is understood as an asynchronous management interface.

The triggering of the asynchronous management interface takes the operation out of the expected synchronous behavior of the coherent interface. An example of an asynchronous management interface can be CXL management handling with MSI-X (message signaled interrupt extended) enabled. With asynchronous management command interface, the fault handler (e.g., via the CXL driver) can request a management command and relinquish control until notified of completion of the operation via an interrupt. The interrupt can trigger the CPU to again access memory 240.

In response to the interrupt, memory 240 will be assumed to be fully awake, with an active link, active device power, interfaces active, and so forth. Memory 240 will then be ready to service requests. In one example, the fault handle event is set, and the remainder of the memory manager fault handling occurs. In one example, driver 216 indicates to CPU 210 that the fault exception has been handled and the CPU can proceed to process the memory access.

There is mention above of pages being locked for DMA. It will be understood that the fault handling to trigger asynchronous operation functions when CPU 210 generates the accesses. However, DMA generally does not generate a fault. Thus, if a page is mapped to DMA to a CXL device, in one example, system 200 does not permit the CXL device to enter a low power state. System 200 can either disallow DMA access to a CXL device, or can allow DMA to the CXL device, but not permit the CXL device to be put in low power states.

The DMA engine typically causes the device to naturally wake, and there are timeouts within the DMA engines. A device that has too long an exit latency may cause DMA failures if it takes too long to wake. The DMA action is not a CPU blocking event; thus, the DMA action will add latency without stalling the CPU for exit latencies within the DMA engine timeout window. In typical CXL operation, the OS completely controls access to the CXL.mem HPA range, where the OS hides the CXL.mem for proprietary uses to benefit the whole system. As such, the content to and from the address range can be at the sole discretion of the OS and memory manager.

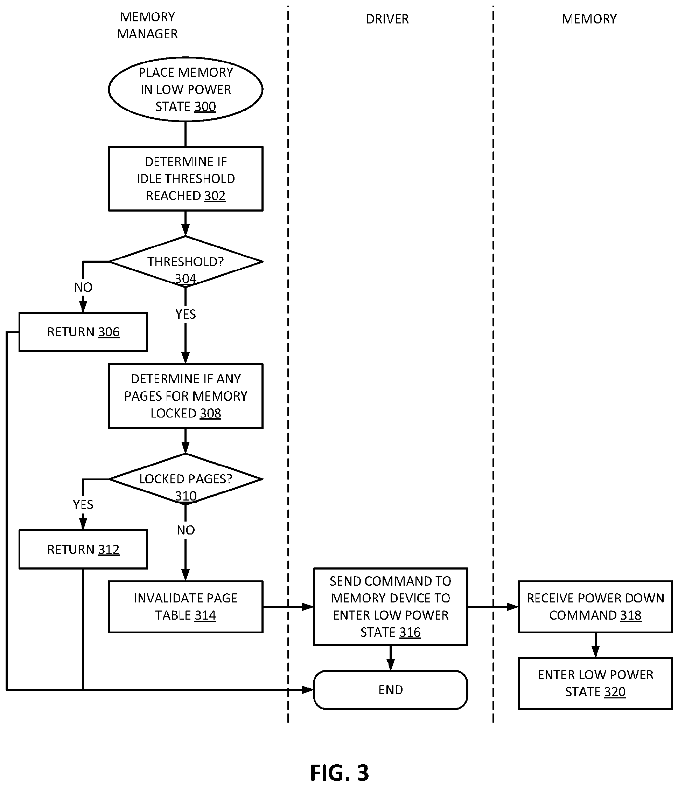

**Figure 3** is a flow diagram of an example of a process for putting a coherent memory into low power. Process 300 represents a process to place a memory or other coherent device in a low power state. Process 300 represents a process that can be executed by a system in accordance with system 200.

The operations are illustrated as being performed by a memory manager or other component of the host operating system, a driver, and a memory device. In one example, the memory manager can be separated into different components, where the different operations can be performed by different components within the memory manager. In one example, one or more components illustrated for the memory manager can be performed by a driver or other system component.

In one example, the memory manager determines if the memory has reached an idle threshold, at 302. In one example, if the idle threshold has not been reached, at 304 NO branch, the operation can return to the start, at 306, which proceeds to the end of the processing operation. If the threshold has been reached, at 304 YES branch, in one example, the memory manager determines if any pages for the memory are locked, at 308.

If there are locked pages, at 310 YES branch, in one example, the memory manager can return to the start, at 312, which proceeds to the end of the processing operation. If there are no pages that are locked, at 310 NO branch, in one example, the memory manager changes a page table entry to invalidate the entry, at 314. The driver can then send a command to the memory device to enter a low power state, at 316.

The host (the memory manager and the driver), will complete the operation for placing the memory in the low power state. The memory receives the power down or low power command from the driver, at 318. The memory can then enter the low power state in accordance with the command, at 320.

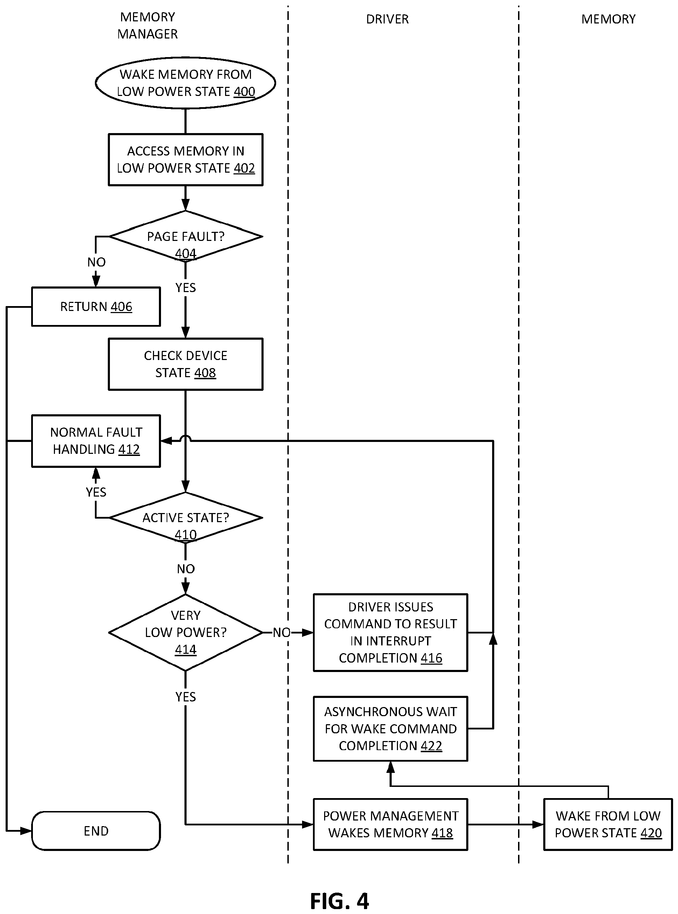

**Figure 4** is a flow diagram of an example of a process for waking a coherent memory from low power. Process 400 represents a process to wake a memory or other coherent device from a low power state. Process 400 represents a process that can be executed by a system in accordance with system 200.

The operations are illustrated as being performed by a memory manager or other component of the host operating system, a driver, and a memory device. In one example, the memory manager can be separated into different components, where the different operations can be performed by different components within the memory manager. In one example, one or more components illustrated for the memory manager can be performed by a driver or other system component.

In one example, the memory manager receives a request from the host processor to access the coherent memory that is in a low power state, at 402. In one example, if the access does not result in a page fault, at 404 NO branch, in one example, the memory manager can return to the start, at 406, which proceeds to the end of the processing operation. If the access results in a page fault, at 404 YES branch, in one example, the memory manager can check the device state, at 408.

If the state of the device is an active state, at 410 YES branch, in one example, the memory manager performs normal fault handling to address the fault, at 412. The normal fault handling can then execute its operations and proceed to the end of the processing. If the memory device is not in an active state, at 410 NO branch, in one example, the memory manager determines whether the device is in a very low power state, or simply a low power state.

If the device is not in a very low power state (meaning it is only in a low power state), at 414 NO branch, in one example, the driver issues a command to result in interrupt completion, at 416. The interrupt completion refers to handling the access with a fault handler, which allows the device sufficient time to wake from the low power state. The processing can then proceed to normal fault handling, at 412.

If the device is in a very low power state, at 414 YES branch, in one example, the driver performs power management operations to wake the memory from the power down or very low power state, at 418. In one example, the driver issues a command to the memory, which the memory receives to wake from the low power state, at 420. When the driver has issued the command to the memory, the processing can proceed to normal fault handling, at 412.

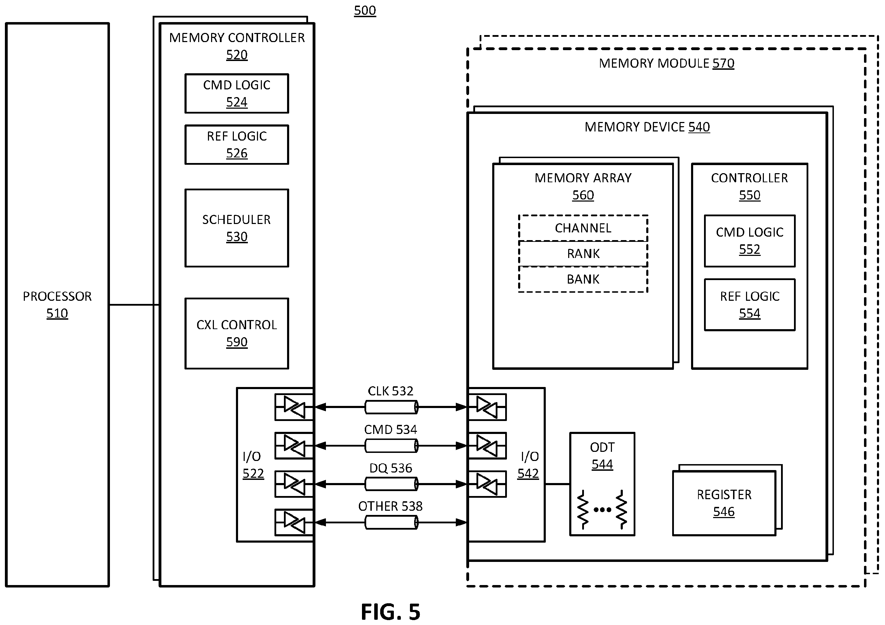

**Figure 5** is a block diagram of an example of a memory subsystem in which coherent low power state management can be implemented. System 500 includes a processor and elements of a memory subsystem in a computing device. System 500 is an example of a system in accordance with an example of system 100 or system 200.

In one example, system 500 includes CXL control 590, which represents power management control of a coherent implementation of memory device 540. CXL control 590 can represent a memory manager and a memory driver in accordance with any example described above. CXL control 590 can manage a page table to cause a subsequent access to memory device 540 to trigger a page fault. Thus, the memory access can be handled through a fault routine. After changing the page table, CXL control 590 can trigger memory device 540 to enter a low power state, in accordance with any example herein.

Processor 510 represents a processing unit of a computing platform that may execute an operating system (OS) and applications, which can collectively be referred to as the host or the user of the memory. The OS and applications execute operations that result in memory accesses. Processor 510 can include one or more separate processors. Each separate processor can include a single processing unit, a multicore processing unit, or a combination. The processing unit can be a primary processor such as a CPU (central processing unit), a peripheral processor such as a GPU (graphics processing unit), or a combination. Memory accesses may also be initiated by devices such as a network controller or hard disk controller. Such devices can be integrated with the processor in some systems or attached to the processer via a bus (e.g., PCI express), or a combination. System 500 can be implemented as an SOC (system on a chip), or be implemented with standalone components.

Reference to memory devices can apply to different memory types. Memory devices often refers to volatile memory technologies. Volatile memory is memory whose state (and therefore the data stored on it) is indeterminate if power is interrupted to the device. Nonvolatile memory refers to memory whose state is determinate even if power is interrupted to the device. Dynamic volatile memory requires refreshing the data stored in the device to maintain state. One example of dynamic volatile memory includes DRAM (dynamic random-access memory), or some variant such as synchronous DRAM (SDRAM). A memory subsystem as described herein may be compatible with a number of memory technologies, such as DDR4 (double data rate version 4, JESD79-4, originally published in September 2012 by JEDEC (Joint Electron Device Engineering Council, now the JEDEC Solid State Technology Association), LPDDR4 (low power DDR version 4, JESD209-4, originally published by JEDEC in August 2014), WIO2 (Wide I/O 2 (WideIO2), JESD229-2, originally published by JEDEC in August 2014), HBM (high bandwidth memory DRAM, JESD235A, originally published by JEDEC in November 2015), DDR5 (DDR version 5, originally published by JEDEC in July 2020), LPDDR5 (LPDDR version 5, JESD209-5, originally published by JEDEC in February 2019), HBM2 (HBM version 2, JESD235C, originally published by JEDEC in January 2020), or HBM3 (HBM version 3, currently in discussion by JEDEC), or others or combinations of memory technologies, and technologies based on derivatives or extensions of such specifications.

In addition to, or alternatively to, volatile memory, in one example, the memory module can be a persistent memory DIMM or nonvolatile system memory, referring to nonvolatile memory connected to the system memory bus. Such a memory device can include a three dimensional crosspoint (3DXP) memory device. 3DXP can operate as a byte addressable nonvolatile memory device or as a block addressable nonvolatile memory device. A memory device can include a nonvolatile, byte addressable media or block addressable media that stores data based on a resistive state of the memory cell, or a phase of the memory cell. In one example, the memory device can use chalcogenide phase change material (e.g., chalcogenide glass). In one example, the system memory device can be or include NAND flash memory for persistent random access memory, NOR flash memory for persistent random access memory, single or multi-level phase change memory (PCM) or phase change memory with a switch (PCMS), a resistive memory, nanowire memory, ferroelectric transistor random-access memory (FeTRAM), magnetoresistive random-access memory (MRAM) memory that incorporates memristor technology, or spin transfer torque (STT)-MRAM, or a combination of any of the above, or other memory.

Memory controller 520 represents one or more memory controller circuits or devices for system 500. Memory controller 520 represents control logic that generates memory access commands in response to the execution of operations by processor 510. Memory controller 520 accesses one or more memory devices 540. Memory devices 540 can be DRAM devices in accordance with any referred to above. In one example, memory devices 540 are organized and managed as different channels, where each channel couples to buses and signal lines that couple to multiple memory devices in parallel. Each channel is independently operable. Thus, each channel is independently accessed and controlled, and the timing, data transfer, command and address exchanges, and other operations are separate for each channel. Coupling can refer to an electrical coupling, communicative coupling, physical coupling, or a combination of these. Physical coupling can include direct contact. Electrical coupling includes an interface or interconnection that allows electrical flow between components, or allows signaling between components, or both. Communicative coupling includes connections, including wired or wireless, that enable components to exchange data.

In one example, settings for each channel are controlled by separate mode registers or other register settings. In one example, each memory controller 520 manages a separate memory channel, although system 500 can be configured to have multiple channels managed by a single controller, or to have multiple controllers on a single channel. In one example, memory controller 520 is part of host processor 510, such as logic implemented on the same die or implemented in the same package space as the processor.

Memory controller 520 includes I/O interface logic 522 to couple to a memory bus, such as a memory channel as referred to above. I/O interface logic 522 (as well as I/O interface logic 542 of memory device 540) can include pins, pads, connectors, signal lines, traces, or wires, or other hardware to connect the devices, or a combination of these. I/O interface logic 522 can include a hardware interface. As illustrated, I/O interface logic 522 includes at least drivers/transceivers for signal lines. Commonly, wires within an integrated circuit interface couple with a pad, pin, or connector to interface signal lines or traces or other wires between devices. I/O interface logic 522 can include drivers, receivers, transceivers, or termination, or other circuitry or combinations of circuitry to exchange signals on the signal lines between the devices. The exchange of signals includes at least one of transmit or receive. While shown as coupling I/O 522 from memory controller 520 to I/O 542 of memory device 540, it will be understood that in an implementation of system 500 where groups of memory devices 540 are accessed in parallel, multiple memory devices can include I/O interfaces to the same interface of memory controller 520. In an implementation of system 500 including one or more memory modules 570, I/O 542 can include interface hardware of the memory module in addition to interface hardware on the memory device itself. Other memory controllers 520 will include separate interfaces to other memory devices 540.

The bus between memory controller 520 and memory devices 540 can be implemented as multiple signal lines coupling memory controller 520 to memory devices 540. The bus may typically include at least clock (CLK) 532, command/address (CMD) 534, and write data (DQ) and read data (DQ) 536, and zero or more other signal lines 538. In one example, a bus or connection between memory controller 520 and memory can be referred to as a memory bus. In one example, the memory bus is a multi-drop bus. The signal lines for CMD can be referred to as a "C/A bus" (or ADD/CMD bus, or some other designation indicating the transfer of commands (C or CMD) and address (A or ADD) information) and the signal lines for write and read DQ can be referred to as a "data bus." In one example, independent channels have different clock signals, C/A buses, data buses, and other signal lines. Thus, system 500 can be considered to have multiple "buses," in the sense that an independent interface path can be considered a separate bus. It will be understood that in addition to the lines explicitly shown, a bus can include at least one of strobe signaling lines, alert lines, auxiliary lines, or other signal lines, or a combination. It will also be understood that serial bus technologies can be used for the connection between memory controller 520 and memory devices 540. An example of a serial bus technology is 5B10B encoding and transmission of high-speed data with embedded clock over a single differential pair of signals in each direction. In one example, CMD 534 represents signal lines shared in parallel with multiple memory devices. In one example, multiple memory devices share encoding command signal lines of CMD 534, and each has a separate chip select (CS_n) signal line to select individual memory devices.

It will be understood that in the example of system 500, the bus between memory controller 520 and memory devices 540 includes a subsidiary command bus CMD 534 and a subsidiary bus to carry the write and read data, DQ 536. In one example, the data bus can include bidirectional lines for read data and for write/command data. In another example, the subsidiary bus DQ 536 can include unidirectional write signal lines for write and data from the host to memory, and can include unidirectional lines for read data from the memory to the host. In accordance with the chosen memory technology and system design, other signals 538 may accompany a bus or sub bus, such as strobe lines DQS. Based on design of system 500, or implementation if a design supports multiple implementations, the data bus can have more or less bandwidth per memory device 540. For example, the data bus can support memory devices that have either a x4 interface, a x8 interface, a x16 interface, or other interface. The convention "xW," where W is an integer that refers to an interface size or width of the interface of memory device 540, which represents a number of signal lines to exchange data with memory controller 520. The interface size of the memory devices is a controlling factor on how many memory devices can be used concurrently per channel in system 500 or coupled in parallel to the same signal lines. In one example, high bandwidth memory devices, wide interface devices, or stacked memory configurations, or combinations, can enable wider interfaces, such as a x128 interface, a x256 interface, a x512 interface, a x1024 interface, or other data bus interface width.

In one example, memory devices 540 and memory controller 520 exchange data over the data bus in a burst, or a sequence of consecutive data transfers. The burst corresponds to a number of transfer cycles, which is related to a bus frequency. In one example, the transfer cycle can be a whole clock cycle for transfers occurring on a same clock or strobe signal edge (e.g., on the rising edge). In one example, every clock cycle, referring to a cycle of the system clock, is separated into multiple unit intervals (UIs), where each UI is a transfer cycle. For example, double data rate transfers trigger on both edges of the clock signal (e.g., rising and falling). A burst can last for a configured number of UIs, which can be a configuration stored in a register, or triggered on the fly. For example, a sequence of eight consecutive transfer periods can be considered a burst length eight (BL8), and each memory device 540 can transfer data on each UI. Thus, a x8 memory device operating on BL8 can transfer 64 bits of data (8 data signal lines times 8 data bits transferred per line over the burst). It will be understood that this simple example is merely an illustration and is not limiting.

Memory devices 540 represent memory resources for system 500. In one example, each memory device 540 is a separate memory die. In one example, each memory device 540 can interface with multiple (e.g., 2) channels per device or die. Each memory device 540 includes I/O interface logic 542, which has a bandwidth determined by the implementation of the device (e.g., x16 or x8 or some other interface bandwidth). I/O interface logic 542 enables the memory devices to interface with memory controller 520. I/O interface logic 542 can include a hardware interface, and can be in accordance with I/O 522 of memory controller, but at the memory device end. In one example, multiple memory devices 540 are connected in parallel to the same command and data buses. In another example, multiple memory devices 540 are connected in parallel to the same command bus, and are connected to different data buses. For example, system 500 can be configured with multiple memory devices 540 coupled in parallel, with each memory device responding to a command, and accessing memory resources 560 internal to each. For a Write operation, an individual memory device 540 can write a portion of the overall data word, and for a Read operation, an individual memory device 540 can fetch a portion of the overall data word. The remaining bits of the word will be provided or received by other memory devices in parallel.

In one example, memory devices 540 are disposed directly on a motherboard or host system platform (e.g., a PCB (printed circuit board) on which processor 510 is disposed) of a computing device. In one example, memory devices 540 can be organized into memory modules 570. In one example, memory modules 570 represent dual inline memory modules (DIMMs). In one example, memory modules 570 represent other organization of multiple memory devices to share at least a portion of access or control circuitry, which can be a separate circuit, a separate device, or a separate board from the host system platform. Memory modules 570 can include multiple memory devices 540, and the memory modules can include support for multiple separate channels to the included memory devices disposed on them. In another example, memory devices 540 may be incorporated into the same package as memory controller 520, such as by techniques such as multi-chip-module (MCM), package-on-package, through-silicon via (TSV), or other techniques or combinations. Similarly, in one example, multiple memory devices 540 may be incorporated into memory modules 570, which themselves may be incorporated into the same package as memory controller 520. It will be appreciated that for these and other implementations, memory controller 520 may be part of host processor 510.

Memory devices 540 each include one or more memory arrays 560. Memory array 560 represents addressable memory locations or storage locations for data. Typically, memory array 560 is managed as rows of data, accessed via wordline (rows) and bitline (individual bits within a row) control. Memory array 560 can be organized as separate channels, ranks, and banks of memory. Channels may refer to independent control paths to storage locations within memory devices 540. Ranks may refer to common locations across multiple memory devices (e.g., same row addresses within different devices) in parallel. Banks may refer to sub-arrays of memory locations within a memory device 540. In one example, banks of memory are divided into sub-banks with at least a portion of shared circuitry (e.g., drivers, signal lines, control logic) for the sub-banks, allowing separate addressing and access. It will be understood that channels, ranks, banks, sub-banks, bank groups, or other organizations of the memory locations, and combinations of the organizations, can overlap in their application to physical resources. For example, the same physical memory locations can be accessed over a specific channel as a specific bank, which can also belong to a rank. Thus, the organization of memory resources will be understood in an inclusive, rather than exclusive, manner.

In one example, memory devices 540 include one or more registers 544. Register 544 represents one or more storage devices or storage locations that provide configuration or settings for the operation of the memory device. In one example, register 544 can provide a storage location for memory device 540 to store data for access by memory controller 520 as part of a control or management operation. In one example, register 544 includes one or more Mode Registers. In one example, register 544 includes one or more multipurpose registers. The configuration of locations within register 544 can configure memory device 540 to operate in different "modes," where command information can trigger different operations within memory device 540 based on the mode. Additionally or in the alternative, different modes can also trigger different operation from address information or other signal lines depending on the mode. Settings of register 544 can indicate configuration for I/O settings (e.g., timing, termination or ODT (on-die termination) 546, driver configuration, or other I/O settings).

In one example, memory device 540 includes ODT 546 as part of the interface hardware associated with I/O 542. ODT 546 can be configured as mentioned above, and provide settings for impedance to be applied to the interface to specified signal lines. In one example, ODT 546 is applied to DQ signal lines. In one example, ODT 546 is applied to command signal lines. In one example, ODT 546 is applied to address signal lines. In one example, ODT 546 can be applied to any combination of the preceding. The ODT settings can be changed based on whether a memory device is a selected target of an access operation or a non-target device. ODT 546 settings can affect the timing and reflections of signaling on the terminated lines. Careful control over ODT 546 can enable higher-speed operation with improved matching of applied impedance and loading. ODT 546 can be applied to specific signal lines of I/O interface 542, 522 (for example, ODT for DQ lines or ODT for CA lines), and is not necessarily applied to all signal lines.

Memory device 540 includes controller 550, which represents control logic within the memory device to control internal operations within the memory device. For example, controller 550 decodes commands sent by memory controller 520 and generates internal operations to execute or satisfy the commands. Controller 550 can be referred to as an internal controller, and is separate from memory controller 520 of the host. Controller 550 can determine what mode is selected based on register 544, and configure the internal execution of operations for access to memory resources 560 or other operations based on the selected mode. Controller 550 generates control signals to control the routing of bits within memory device 540 to provide a proper interface for the selected mode and direct a command to the proper memory locations or addresses. Controller 550 includes command logic 552, which can decode command encoding received on command and address signal lines. Thus, command logic 552 can be or include a command decoder. With command logic 552, memory device can identify commands and generate internal operations to execute requested commands.

Referring again to memory controller 520, memory controller 520 includes command (CMD) logic 524, which represents logic or circuitry to generate commands to send to memory devices 540. The generation of the commands can refer to the command prior to scheduling, or the preparation of queued commands ready to be sent. Generally, the signaling in memory subsystems includes address information within or accompanying the command to indicate or select one or more memory locations where the memory devices should execute the command. In response to scheduling of transactions for memory device 540, memory controller 520 can issue commands via I/O 522 to cause memory device 540 to execute the commands. In one example, controller 550 of memory device 540 receives and decodes command and address information received via I/O 542 from memory controller 520. Based on the received command and address information, controller 550 can control the timing of operations of the logic and circuitry within memory device 540 to execute the commands. Controller 550 is responsible for compliance with standards or specifications within memory device 540, such as timing and signaling requirements. Memory controller 520 can implement compliance with standards or specifications by access scheduling and control.

Memory controller 520 includes scheduler 530, which represents logic or circuitry to generate and order transactions to send to memory device 540. From one perspective, the primary function of memory controller 520 could be said to schedule memory access and other transactions to memory device 540. Such scheduling can include generating the transactions themselves to implement the requests for data by processor 510 and to maintain integrity of the data (e.g., such as with commands related to refresh). Transactions can include one or more commands, and result in the transfer of commands or data or both over one or multiple timing cycles such as clock cycles or unit intervals. Transactions can be for access such as read or write or related commands or a combination, and other transactions can include memory management commands for configuration, settings, data integrity, or other commands or a combination.

Memory controller 520 typically includes logic such as scheduler 530 to allow selection and ordering of transactions to improve performance of system 500. Thus, memory controller 520 can select which of the outstanding transactions should be sent to memory device 540 in which order, which is typically achieved with logic much more complex that a simple first-in first-out algorithm. Memory controller 520 manages the transmission of the transactions to memory device 540, and manages the timing associated with the transaction. In one example, transactions have deterministic timing, which can be managed by memory controller 520 and used in determining how to schedule the transactions with scheduler 530.

In one example, memory controller 520 includes refresh (REF) logic 526. Refresh logic 526 can be used for memory resources that are volatile and need to be refreshed to retain a deterministic state. In one example, refresh logic 526 indicates a location for refresh, and a type of refresh to perform. Refresh logic 526 can trigger self-refresh within memory device 540, or execute external refreshes which can be referred to as auto refresh commands) by sending refresh commands, or a combination. In one example, controller 550 within memory device 540 includes refresh logic 554 to apply refresh within memory device 540. In one example, refresh logic 554 generates internal operations to perform refresh in accordance with an external refresh received from memory controller 520. Refresh logic 554 can determine if a refresh is directed to memory device 540, and what memory resources 560 to refresh in response to the command.

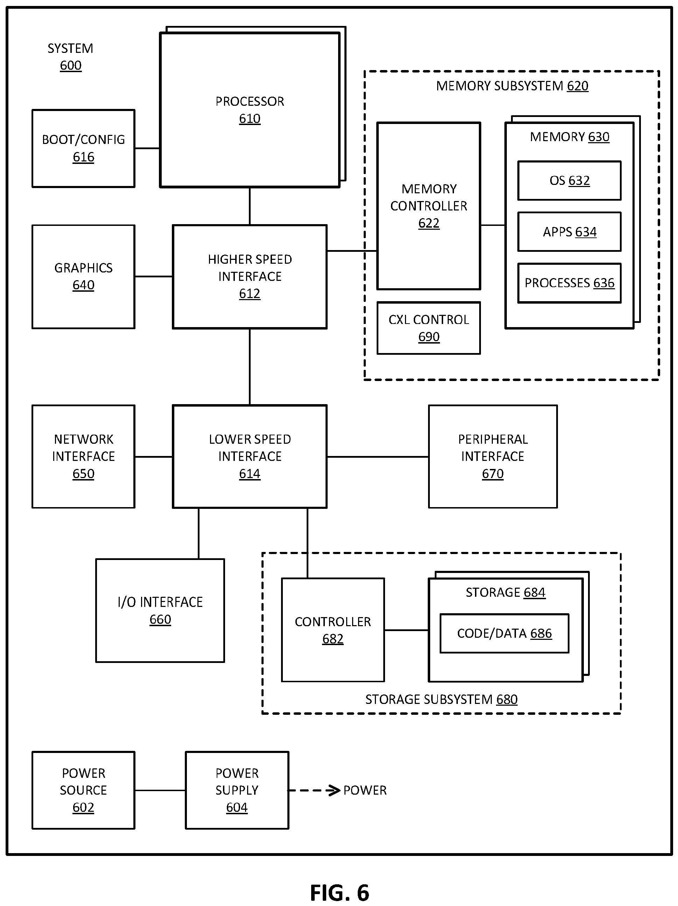

**Figure** 6 is a block diagram of an example of a computing system in which coherent low power state management can be implemented. System 600 represents a computing device in accordance with any example herein, and can be a laptop computer, a desktop computer, a tablet computer, a server, a gaming or entertainment control system, embedded computing device, or other electronic device.

System 600 represents a system in accordance with an example of system 100 or system 200. In one example, system 600 includes CXL control 690, which represents power management control of a coherent implementation of memory 630. CXL control 690 can represent a memory manager and a memory driver in accordance with any example described above. CXL control 690 can manage a page table to cause a subsequent access to memory 630 to trigger a page fault. Thus, the memory access can be handled through a fault routine. After changing the page table, CXL control 690 can trigger memory 630 to enter a low power state, in accordance with any example herein.

System 600 includes processor 610 can include any type of microprocessor, central processing unit (CPU), graphics processing unit (GPU), processing core, or other processing hardware, or a combination, to provide processing or execution of instructions for system 600. Processor 610 can be a host processor device. Processor 610 controls the overall operation of system 600, and can be or include, one or more programmable general-purpose or special-purpose microprocessors, digital signal processors (DSPs), programmable controllers, application specific integrated circuits (ASICs), programmable logic devices (PLDs), or a combination of such devices.

System 600 includes boot/config 616, which represents storage to store boot code (e.g., basic input/output system (BIOS)), configuration settings, security hardware (e.g., trusted platform module (TPM)), or other system level hardware that operates outside of a host OS. Boot/config 616 can include a nonvolatile storage device, such as read-only memory (ROM), flash memory, or other memory devices.

In one example, system 600 includes interface 612 coupled to processor 610, which can represent a higher speed interface or a high throughput interface for system components that need higher bandwidth connections, such as memory subsystem 620 or graphics interface components 640. Interface 612 represents an interface circuit, which can be a standalone component or integrated onto a processor die. Interface 612 can be integrated as a circuit onto the processor die or integrated as a component on a system on a chip. Where present, graphics interface 640 interfaces to graphics components for providing a visual display to a user of system 600. Graphics interface 640 can be a standalone component or integrated onto the processor die or system on a chip. In one example, graphics interface 640 can drive a high definition (HD) display or ultra high definition (UHD) display that provides an output to a user. In one example, the display can include a touchscreen display. In one example, graphics interface 640 generates a display based on data stored in memory 630 or based on operations executed by processor 610 or both.

Memory subsystem 620 represents the main memory of system 600, and provides storage for code to be executed by processor 610, or data values to be used in executing a routine. Memory subsystem 620 can include one or more memory devices 630 such as read-only memory (ROM), flash memory, one or more varieties of random-access memory (RAM) such as DRAM, 3DXP (three-dimensional crosspoint), or other memory devices, or a combination of such devices. Memory 630 stores and hosts, among other things, operating system (OS) 632 to provide a software platform for execution of instructions in system 600. Additionally, applications 634 can execute on the software platform of OS 632 from memory 630. Applications 634 represent programs that have their own operational logic to perform execution of one or more functions. Processes 636 represent agents or routines that provide auxiliary functions to OS 632 or one or more applications 634 or a combination. OS 632, applications 634, and processes 636 provide software logic to provide functions for system 600. In one example, memory subsystem 620 includes memory controller 622, which is a memory controller to generate and issue commands to memory 630. It will be understood that memory controller 622 could be a physical part of processor 610 or a physical part of interface 612. For example, memory controller 622 can be an integrated memory controller, integrated onto a circuit with processor 610, such as integrated onto the processor die or a system on a chip.

While not specifically illustrated, it will be understood that system 600 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a HyperTransport or industry standard architecture (ISA) bus, a small computer system interface (SCSI) bus, a universal serial bus (USB), or other bus, or a combination.

In one example, system 600 includes interface 614, which can be coupled to interface 612. Interface 614 can be a lower speed interface than interface 612. In one example, interface 614 represents an interface circuit, which can include standalone components and integrated circuitry. In one example, multiple user interface components or peripheral components, or both, couple to interface 614. Network interface 650 provides system 600 the ability to communicate with remote devices (e.g., servers or other computing devices) over one or more networks. Network interface 650 can include an Ethernet adapter, wireless interconnection components, cellular network interconnection components, USB (universal serial bus), or other wired or wireless standards-based or proprietary interfaces. Network interface 650 can exchange data with a remote device, which can include sending data stored in memory or receiving data to be stored in memory.

In one example, system 600 includes one or more input/output (I/O) interface(s) 660. I/O interface 660 can include one or more interface components through which a user interacts with system 600 (e.g., audio, alphanumeric, tactile/touch, or other interfacing). Peripheral interface 670 can include any hardware interface not specifically mentioned above. Peripherals refer generally to devices that connect dependently to system 600. A dependent connection is one where system 600 provides the software platform or hardware platform or both on which operation executes, and with which a user interacts.

In one example, system 600 includes storage subsystem 680 to store data in a nonvolatile manner. In one example, in certain system implementations, at least certain components of storage 680 can overlap with components of memory subsystem 620. Storage subsystem 680 includes storage device(s) 684, which can be or include any conventional medium for storing large amounts of data in a nonvolatile manner, such as one or more magnetic, solid state, 3DXP, or optical based disks, or a combination. Storage 684 holds code or instructions and data 686 in a persistent state (i.e., the value is retained despite interruption of power to system 600). Storage 684 can be generically considered to be a "memory," although memory 630 is typically the executing or operating memory to provide instructions to processor 610. Whereas storage 684 is nonvolatile, memory 630 can include volatile memory (i.e., the value or state of the data is indeterminate if power is interrupted to system 600). In one example, storage subsystem 680 includes controller 682 to interface with storage 684. In one example controller 682 is a physical part of interface 614 or processor 610, or can include circuits or logic in both processor 610 and interface 614.

Power source 602 provides power to the components of system 600. More specifically, power source 602 typically interfaces to one or multiple power supplies 604 in system 600 to provide power to the components of system 600. In one example, power supply 604 includes an AC to DC (alternating current to direct current) adapter to plug into a wall outlet. Such AC power can be renewable energy (e.g., solar power) power source 602. In one example, power source 602 includes a DC power source, such as an external AC to DC converter. In one example, power source 602 or power supply 604 includes wireless charging hardware to charge via proximity to a charging field. In one example, power source 602 can include an internal battery or fuel cell source.

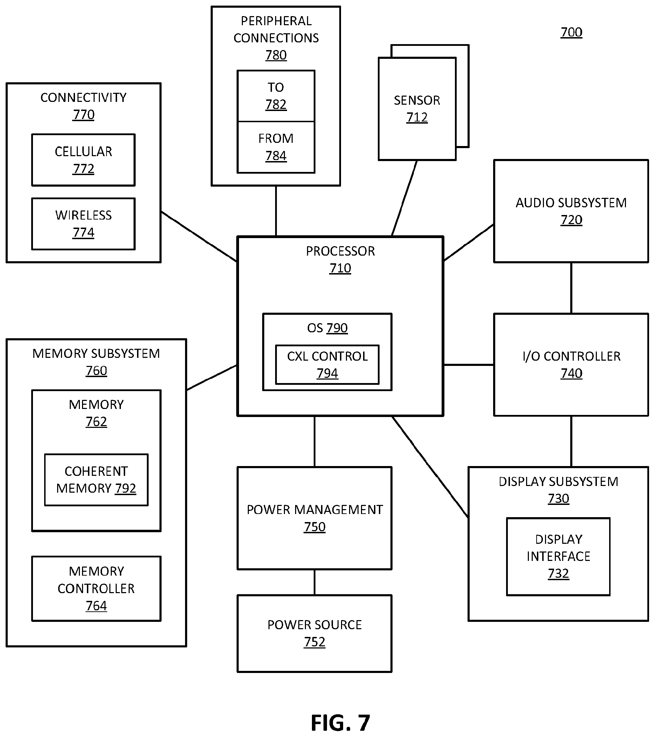

**Figure 7** is a block diagram of an example of a mobile device in which coherent low power state management can be implemented. System 700 represents a mobile computing device, such as a computing tablet, a mobile phone or smartphone, wearable computing device, or other mobile device, or an embedded computing device. It will be understood that certain of the components are shown generally, and not all components of such a device are shown in system 700. System 700 is one example of a system that can incorporate a system compatible with system 100 or system 200.

In one example, memory subsystem 760 includes memory 762, which can include one or more coherent memory resources, identified as coherent memory 792. In one example, system 700 includes OS 790 with CXL control 794, which represents power management control of coherent memory 792. CXL control 794 can represent a memory manager and a memory driver in accordance with any example described above. CXL control 794 can manage a page table to cause a subsequent access to coherent memory 792 to trigger a page fault. Thus, the memory access can be handled through a fault routine. After changing the page table, CXL control 794 can trigger coherent memory 792 to enter a low power state, in accordance with any example herein.

System 700 includes processor 710, which performs the primary processing operations of system 700. Processor 710 can include one or more physical devices, such as microprocessors, application processors, microcontrollers, programmable logic devices, or other processing means. The processing operations performed by processor 710 include the execution of an operating platform or operating system on which applications and device functions are executed. The processing operations include operations related to I/O (input/output) with a human user or with other devices, operations related to power management, operations related to connecting system 700 to another device, or a combination. The processing operations can also include operations related to audio I/O, display I/O, or other interfacing, or a combination. Processor 710 can execute data stored in memory. Processor 710 can write or edit data stored in memory.

In one example, system 700 includes one or more sensors 712. Sensors 712 represent embedded sensors or interfaces to external sensors, or a combination. Sensors 712 enable system 700 to monitor or detect one or more conditions of an environment or a device in which system 700 is implemented. Sensors 712 can include environmental sensors (such as temperature sensors, motion detectors, light detectors, cameras, chemical sensors (e.g., carbon monoxide, carbon dioxide, or other chemical sensors)), pressure sensors, accelerometers, gyroscopes, medical or physiology sensors (e.g., biosensors, heart rate monitors, or other sensors to detect physiological attributes), or other sensors, or a combination. Sensors 712 can also include sensors for biometric systems such as fingerprint recognition systems, face detection or recognition systems, or other systems that detect or recognize user features. Sensors 712 should be understood broadly, and not limiting on the many different types of sensors that could be implemented with system 700. In one example, one or more sensors 712 couples to processor 710 via a frontend circuit integrated with processor 710. In one example, one or more sensors 712 couples to processor 710 via another component of system 700.

In one example, system 700 includes audio subsystem 720, which represents hardware (e.g., audio hardware and audio circuits) and software (e.g., drivers, codecs) components associated with providing audio functions to the computing device. Audio functions can include speaker or headphone output, as well as microphone input. Devices for such functions can be integrated into system 700, or connected to system 700. In one example, a user interacts with system 700 by providing audio commands that are received and processed by processor 710.

Display subsystem 730 represents hardware (e.g., display devices) and software components (e.g., drivers) that provide a visual display for presentation to a user. In one example, the display includes tactile components or touchscreen elements for a user to interact with the computing device. Display subsystem 730 includes display interface 732, which includes the particular screen or hardware device used to provide a display to a user. In one example, display interface 732 includes logic separate from processor 710 (such as a graphics processor) to perform at least some processing related to the display. In one example, display subsystem 730 includes a touchscreen device that provides both output and input to a user. In one example, display subsystem 730 includes a high definition (HD) or ultra-high definition (UHD) display that provides an output to a user. In one example, display subsystem includes or drives a touchscreen display. In one example, display subsystem 730 generates display information based on data stored in memory or based on operations executed by processor 710 or both.

I/O controller 740 represents hardware devices and software components related to interaction with a user. I/O controller 740 can operate to manage hardware that is part of audio subsystem 720, or display subsystem 730, or both. Additionally, I/O controller 740 illustrates a connection point for additional devices that connect to system 700 through which a user might interact with the system. For example, devices that can be attached to system 700 might include microphone devices, speaker or stereo systems, video systems or other display device, keyboard or keypad devices, buttons/switches, or other I/O devices for use with specific applications such as card readers or other devices.

As mentioned above, I/O controller 740 can interact with audio subsystem 720 or display subsystem 730 or both. For example, input through a microphone or other audio device can provide input or commands for one or more applications or functions of system 700. Additionally, audio output can be provided instead of or in addition to display output. In another example, if display subsystem includes a touchscreen, the display device also acts as an input device, which can be at least partially managed by I/O controller 740. There can also be additional buttons or switches on system 700 to provide I/O functions managed by I/O controller 740.

In one example, I/O controller 740 manages devices such as accelerometers, cameras, light sensors or other environmental sensors, gyroscopes, global positioning system (GPS), or other hardware that can be included in system 700, or sensors 712. The input can be part of direct user interaction, as well as providing environmental input to the system to influence its operations (such as filtering for noise, adjusting displays for brightness detection, applying a flash for a camera, or other features).

In one example, system 700 includes power management 750 that manages battery power usage, charging of the battery, and features related to power saving operation. Power management 750 manages power from power source 752, which provides power to the components of system 700. In one example, power source 752 includes an AC to DC (alternating current to direct current) adapter to plug into a wall outlet. Such AC power can be renewable energy (e.g., solar power, motion based power). In one example, power source 752 includes only DC power, which can be provided by a DC power source, such as an external AC to DC converter. In one example, power source 752 includes wireless charging hardware to charge via proximity to a charging field. In one example, power source 752 can include an internal battery or fuel cell source.

Memory subsystem 760 includes memory device(s) 762 for storing information in system 700. Memory subsystem 760 can include nonvolatile (state does not change if power to the memory device is interrupted) or volatile (state is indeterminate if power to the memory device is interrupted) memory devices, or a combination. Memory 760 can store application data, user data, music, photos, documents, or other data, as well as system data (whether long-term or temporary) related to the execution of the applications and functions of system 700. In one example, memory subsystem 760 includes memory controller 764 (which could also be considered part of the control of system 700, and could potentially be considered part of processor 710). Memory controller 764 includes a scheduler to generate and issue commands to control access to memory device 762.

Connectivity 770 includes hardware devices (e.g., wireless or wired connectors and communication hardware, or a combination of wired and wireless hardware) and software components (e.g., drivers, protocol stacks) to enable system 700 to communicate with external devices. The external device could be separate devices, such as other computing devices, wireless access points or base stations, as well as peripherals such as headsets, printers, or other devices. In one example, system 700 exchanges data with an external device for storage in memory or for display on a display device. The exchanged data can include data to be stored in memory, or data already stored in memory, to read, write, or edit data.

Connectivity 770 can include multiple different types of connectivity. To generalize, system 700 is illustrated with cellular connectivity 772 and wireless connectivity 774. Cellular connectivity 772 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, LTE (long term evolution - also referred to as "4G"), 5G, or other cellular service standards. Wireless connectivity 774 refers to wireless connectivity that is not cellular, and can include personal area networks (such as Bluetooth), local area networks (such as WiFi), or wide area networks (such as WiMax), or other wireless communication, or a combination. Wireless communication refers to transfer of data through the use of modulated electromagnetic radiation through a non-solid medium. Wired communication occurs through a solid communication medium.

Peripheral connections 780 include hardware interfaces and connectors, as well as software components (e.g., drivers, protocol stacks) to make peripheral connections. It will be understood that system 700 could both be a peripheral device ("to" 782) to other computing devices, as well as have peripheral devices ("from" 784) connected to it. System 700 commonly has a "docking" connector to connect to other computing devices for purposes such as managing (e.g., downloading, uploading, changing, synchronizing) content on system 700. Additionally, a docking connector can allow system 700 to connect to certain peripherals that allow system 700 to control content output, for example, to audiovisual or other systems.

In addition to a proprietary docking connector or other proprietary connection hardware, system 700 can make peripheral connections 780 via common or standards-based connectors. Common types can include a Universal Serial Bus (USB) connector (which can include any of a number of different hardware interfaces), DisplayPort including MiniDisplayPort (MDP), High Definition Multimedia Interface (HDMI), or other type.

In general with respect to the descriptions herein, in one example an apparatus includes: a substrate; and host hardware on the substrate, the host hardware to execute memory control to manage access to a memory device, the memory control to change a page table entry for the memory device to cause a page fault for a subsequent access to the memory device, and trigger the memory device to enter a low power state after the change to the page table entry.

In an example of the apparatus, the memory device comprises a byte addressable memory device. In any preceding example of the apparatus, the memory device comprises a nonvolatile memory device. In any preceding example of the apparatus, the memory device comprises a memory device compatible with a CXL (COMPUTE EXPRESS LINK)-cache/memory protocol interface (CPI) standard. In any preceding example of the apparatus, the memory device comprises a three-dimensional crosspoint (3DXP) memory device. In any preceding example of the apparatus, the memory control to change the page table comprises the memory control to invalidate the entry without removing the entry from the page table. In any preceding example of the apparatus, the memory control to invalidate the entry comprises the memory control to clear a present bit indicator for a memory address range in the page table. In any preceding example of the apparatus, the memory control is to change the page table entry in response to a determination that the memory device has been idle for a threshold period. In any preceding example of the apparatus, prior to changing the page table, the memory control is to determine if the low power state for the memory device has a wake latency that will cause a host processor to stall, and change the page table in response to a determination that the low power state has a wake latency that will cause the host processor to stall. In any preceding example of the apparatus, prior to changing the page table, the memory control is to determine if the memory device stores data associated with a locked page, and change the page table only in response to a determination that the memory device does not store data associated with a locked page.

In general with respect to the descriptions herein, in one example a system includes: a memory device managed with coherent access; and host hardware to execute memory control to manage access to the memory device, the memory control to change a page table entry for the memory device to cause a page fault for a subsequent access to the memory device, and trigger the memory device to enter a low power state after the change to the page table entry.

In an example of the system, the memory device comprises a byte addressable memory device. In any preceding example of the system, the memory device comprises a nonvolatile memory device. In any preceding example of the system, the memory device comprises a memory device compatible with a CXL (COMPUTE EXPRESS LINK)-cache/memory protocol interface (CPI) standard. In any preceding example of the system, the memory device comprises a three-dimensional crosspoint (3DXP) memory device. In any preceding example of the system, the memory control to change the page table comprises the memory control to invalidate the entry without removing the entry from the page table. In any preceding example of the system, the memory control to invalidate the entry comprises the memory control to clear a present bit indicator for a memory address range in the page table. In any preceding example of the system, the memory control is to change the page table entry in response to a determination that the memory device has been idle for a threshold period. In any preceding example of the system, prior to changing the page table, the memory control is to determine if the low power state for the memory device has a wake latency that will cause a host processor to stall, and change the page table in response to a determination that the low power state has a wake latency that will cause the host processor to stall. In any preceding example of the system, prior to changing the page table, the memory control is to determine if the memory device stores data associated with a locked page, and change the page table only in response to a determination that the memory device does not store data associated with a locked page. In any preceding example of the system, the host hardware includes one or more of: a host processor; a display communicatively coupled to a host processor; a network interface communicatively coupled to a host processor; or an interface to a battery to power the system.

In general with respect to the descriptions herein, in one example a method for putting a memory device into a low power state includes: determining that a memory device managed with coherent access has been idle for a threshold period; changing a page table entry for the memory device to cause a page fault for a subsequent access to the memory device; and triggering the memory device to enter a low power state after changing the page table entry.

In an example of the method, the memory device comprises a byte addressable memory device. In any preceding example of the method, the memory device comprises a nonvolatile memory device. In any preceding example of the method, the memory device comprises a memory device compatible with a CXL (COMPUTE EXPRESS LINK)-cache/memory protocol interface (CPI) standard. In any preceding example of the method, the memory device comprises a three-dimensional crosspoint (3DXP) memory device. In any preceding example of the method, changing the page table comprises invalidating the entry without removing the entry from the page table. In any preceding example of the method, invalidating the entry comprises clearing a present bit indicator for a memory address range in the page table. In any preceding example of the method, prior to changing the page table, determining if the low power state for the memory device has a wake latency that will cause a host processor to stall, and changing the page table in response to a determination that the low power state has a wake latency that will cause the host processor to stall. In any preceding example of the method, prior to changing the page table, determining if the memory device stores data associated with a locked page, and changing the page table only in response to a determination that the memory device does not store data associated with a locked page.

In general with respect to the descriptions herein, in one example a computer-readable storage medium includes instructions stored thereon, which when executed by a processor cause the processor to execute a method in accordance with any example of the preceding two paragraphs.

Flow diagrams as illustrated herein provide examples of sequences of various process actions. The flow diagrams can indicate operations to be executed by a software or firmware routine, as well as physical operations. A flow diagram can illustrate an example of the implementation of states of a finite state machine (FSM), which can be implemented in hardware and/or software. Although shown in a particular sequence or order, unless otherwise specified, the order of the actions can be modified. Thus, the illustrated diagrams should be understood only as examples, and the process can be performed in a different order, and some actions can be performed in parallel. Additionally, one or more actions can be omitted; thus, not all implementations will perform all actions.

To the extent various operations or functions are described herein, they can be described or defined as software code, instructions, configuration, and/or data. The content can be directly executable ("object" or "executable" form), source code, or difference code ("delta" or "patch" code). The software content of what is described herein can be provided via an article of manufacture with the content stored thereon, or via a method of operating a communication interface to send data via the communication interface. A machine readable storage medium can cause a machine to perform the functions or operations described, and includes any mechanism that stores information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

Besides what is described herein, various modifications can be made to what is disclosed and implementations of the invention without departing from their scope. Therefore, the illustrations and examples herein should be construed in an illustrative, and not a restrictive sense. The scope of the invention should be measured solely by reference to the claims that follow.

## Claims

1. A system for memory power management, comprising:
a memory device managed with coherent access; and
host hardware to execute memory control to manage access to the memory device, the memory control to change a page table entry for the memory device to cause a page fault for a subsequent access to the memory device, and trigger the memory device to enter a low power state after the change to the page table entry.

2. The system of claim 1, wherein the memory device comprises a byte addressable memory device; and/or wherein the memory device comprises a nonvolatile memory device; and/or wherein the memory device comprises a memory device compatible with a CXL (COMPUTE EXPRESS LINK)-cache/memory protocol interface (CPI) standard.

3. The system of claim 1, wherein the memory device comprises a three-dimensional crosspoint (3DXP) memory device.

4. The system of any of claims 1 to 3, wherein the memory driver to change the page table comprises the memory driver to invalidate the entry without removing the entry from the page table; and optionally, wherein the memory driver to invalidate the entry comprises the memory driver to clear a present bit indicator for a memory address range in the page table.

5. The system of any of claims 1 to 4, wherein the memory driver is to change the page table entry in response to a determination that the memory device has been idle for a threshold period.

6. The system of any of claims 1 to 5, wherein prior to changing the page table, the memory driver is to determine if the low power state for the memory device has a wake latency that will cause a host processor to stall, and change the page table in response to a determination that the low power state has a wake latency that will cause the host processor to stall.

7. The system of any of claims 1 to 6, wherein prior to changing the page table, the memory driver is to determine if the memory device stores data associated with a locked page, and change the page table only in response to a determination that the memory device does not store data associated with a locked page.

8. The system of any of claims 1 to 7, wherein the host hardware includes one or more of:
a host processor;
a display communicatively coupled to a host processor;
a network interface communicatively coupled to a host processor; or
an interface to a battery to power the system.

9. A method for putting a memory device into a low power state, comprising:
determining that a memory device managed with coherent access has been idle for a threshold period;
changing a page table entry for the memory device to cause a page fault for a subsequent access to the memory device; and
triggering the memory device to enter a low power state after changing the page table entry.

10. The method of claim 9, wherein the memory device comprises a byte addressable memory device; and/or wherein the memory device comprises a nonvolatile memory device; and/or wherein the memory device comprises a memory device compatible with a CXL (COMPUTE EXPRESS LINK)-cache/memory protocol interface (CPI) standard.

11. The method of claim 9, wherein the memory device comprises a three-dimensional crosspoint (3DXP) memory device.

12. The method of any of claims 9 to 11, wherein changing the page table comprises invalidating the entry without removing the entry from the page table; and optionally, wherein invalidating the entry comprises clearing a present bit indicator for a memory address range in the page table.

13. The method of any of claims 9 to 12, wherein prior to changing the page table, determining if the low power state for the memory device has a wake latency that will cause a host processor to stall, and changing the page table in response to a determination that the low power state has a wake latency that will cause the host processor to stall.

14. The method of any of claims 9 to 13, wherein prior to changing the page table, determining if the memory device stores data associated with a locked page, and changing the page table only in response to a determination that the memory device does not store data associated with a locked page.

15. A computer readable storage medium having instructions stored thereon, which when executed by a computing device, cause the computing device to perform operations in accordance with the method of any of claims 9 to 14.
